## Europäisches Patentamt
## European Patent Office
## Office européen des brevets

(19)

(11) Veröffentlichungsnummer: **0 116 129**
**B1**

(12)

# EUROPÄISCHE PATENTSCHRIFT

(45) Veröffentlichungstag der Patentschrift:
24.09.86

(51) Int. Cl.⁴: **G 01 D 1/10**

(21) Anmeldenummer: **83111463.2**

(22) Anmeldetag: **17.11.83**

(54) **Messeinrichtung.**

(30) Priorität: 15.01.83  DE 3301256

(43) Veröffentlichungstag der Anmeldung:
22.08.84 Patentblatt 84/34

(45) Bekanntmachung des Hinweises auf die Patenterteilung:
24.09.86 Patentblatt 86/39

(84) Benannte Vertragsstaaten:
AT CH DE FR GB IT LI NL SE

(56) Entgegenhaltungen:
DE-A-2 207 695
DE-A-2 916 141
DE-B-1 273 210
DE-C-2 751 757

(73) Patentinhaber: **Dr. Johannes Heidenhain GmbH,
Nansenstrasse 17, D-8225 Traunreut (DE)**

(72) Erfinder: **Schmitt, Walter, Ing. grad.,
Hochgernstrasse 22, D-8225 Traunreut (DE)**
Erfinder: **Michel, Dieter, Ing. grad.,
Langauenstrasse 12, D-8220 Traunstein (DE)**

EP 0 116 129 B1

## Beschreibung

Die Erfindung betrifft eine Meßeinrichtung gemäß dem Oberbegriff des Anspruchs 1.

Bei einer derartigen Meßeinrichtung mit einem mechanisch-elektrischen Wandler kann die mechanische Eingangsgröße einen Weg, einen Winkel, eine Kraft, einen Druck, eine Spannung etc. darstellen; diese Wandler arbeiten beispielsweise auf lichtelektrischer induktiver, kapazitiver oder piezoelektrischer Grundlage. Bestimmte Wandler bedürfen einer Hilfsenergiequelle, z.B. der lichtelektrische Wandler einer Lichtquelle.

Aus der DE-C- 27 51 757 ist ein lichtelektrischer Wandler mit einer eine Lichtstrahlung aussendenden Lichtquelle und mit einem senkrecht zur Lichtstrahlenrichtung und gegenüber einem Differentialphotoempfänger beweglichen, eine Nullstellung festlegenden Element bekannt, mit dem die auf den Differentialphotoempfänger gerichtete Lichtstrahlung beeinflußbar ist. Eine Auswerteschaltung zum Erkennen der Nullstellung des beweglichen Elements bei einer derartigen leichtelektrischen Einrichtung ist der DE-B-12 73 210 zu entnehmen, bei der die beiden Photoempfänger zusammen mit zwei gleichen Widerständen eine mit einer Gleichspannung beaufschlagte Brückenschaltung bilden, in derem Diagonalzweig ein Nullpunktdetektor liegt.

Die Indikationsgenauigkeit derartiger Wandler ist aber in der Regel durch Drifteffekte begrenzt, die beispieleweise durch Temperaturgang und Alterung bedingt sind.

Der Erfindung liegt die Aufgabe zugrunde, eine Meßeinrichtung der oben genannten Gattung anzugeben, bei der solche Drifteffekte keinen Einfluß auf die Indikationsgenauigkeit haben.

Diese Aufgabe wird bei einer Meßeinrichtung der eingangs genannten Art erfindungsgemäß durch die kennzeichnenden Merkmale des Anspruchs 1 gelöst.

Die mit der Erfindung erzielten Vorteile bestehen insbesondere darin, daß bei einer derartigen Meßeinrichtung mit einfachen Mitteln die Meßgenauigkeit wesentlich gesteigert werden kann.

Vorteilhafte Weiterbildungen der Erfindung entnimmt man den Unteransprüchen.

Ausführungsbeispiele der Erfindung werden anhand der Zeichnung näher erläutert.

Es zeigen

Figur 1 eine Schaltungsanordnung mit Merkmalen der Erfindung,

Figur 2 ein Diagramm der Kennlinie eines Wandlers,

Figur 3 eine weitere Schaltungsanordnung und

Figur 4 eine Schaltungsanordnung mit einem Differenzwandler.

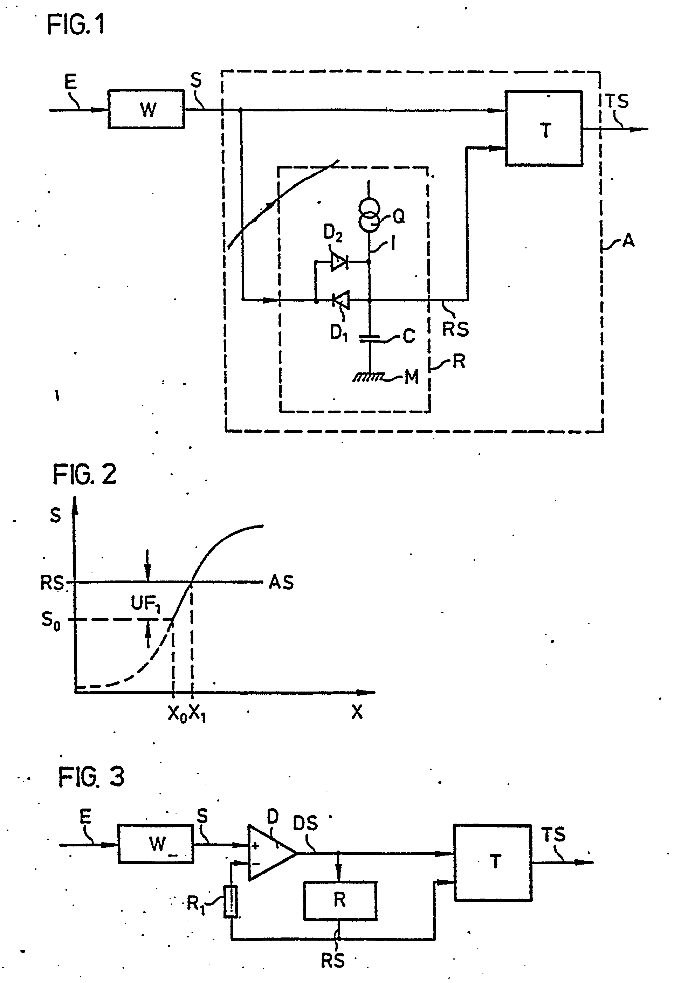

In Figur 1 ist eine Meßeinrichtung mit einem mechanisch-elektrischen Wandler W dargestellt, dessen mechanische Eingangsgröße E, die beispielsweise eine Länge x darstellt, in ein elektrisches Analogsignal S umgewandelt wird.

Zur Indikation eines mechanischen Nullpunktes $x_0$ der mechanischen Eingangsgröße E wird das Analogsignal S des Wandlers W erfindungsgemäß in einer Auswerteschaltung A einmal dem ersten Eingang einer Triggerstufe T und zum anderen dem Eingang einer Referenzsignalstufe R zugeführt, dessen Referenzsignal RS vom Analogsignal S abhängig ist und den zweiten Eingang der Triggerstufe T beaufschlagt.

Zur Erzeugung des Referenzsignals RS in Abhängigkeit vom Analogsignal S ist in der Referenzsignalstufe R ein Kondensator C vorgesehen, der einmal mit Masse M und zum anderen mit einer Stromquelle R verbunden ist, die den Kondensator C mit einem Strom I lädt, bis die Spannung am Kondensator C eine Größe erreicht, daß eine Diode $D_1$ leitend wird, deren positiver Pol am Kondensator C und deren negativer Pol am Eingang der Referenzsignalstuge R angeschlossen ist, der mit dem Analogsignal S des Wandlers W beaufschlagt ist. Über die leitend gewordene Diode $D_1$ fließt sodann der gesamte Ladestrom 1 der Stromquelle Q für den Kondensator C in den Ausgang des Wandlers W ab. Damit ergibt sich ein Referenzsignal RS, das um die kontante Flußspannung $UF_1$ der Diode $D_1$ positiver als das Analogsignal S ist.

In Figur 2 ist die Kennlinie des Analogsignals S des Wandlers W als Funktion des Weges x dargestellt. Beim mechanischen Nullpunkt $x_0$ der Eingangsgröße E hat das Analogsignal S des Wandlers W den Wert $S_0$. Im leitenden Zustand der Diode $D_1$ hat das Referenzsignal RS einen Wert, der um die Flußspannung $UF_1$ der Diode $D_1$ positiver als das Analogsignal $S_0$ ist. Dieses Referenzsignal RS liegt am zweiten Eingang der Triggerstufe T an und bestimmt somit deren Ansprechschwelle AS. Verläßt die Eingangsgröße E den mechanischen Nullpunkt $x_0$, erfährt das Analogsignal S eine schnelle positive Änderung, die beim Überschreiten der Flußspannung $UF_1$ der Diode $D_1$ die Ansprechschwelle AS der Triggerstufe R erreicht, so daß am Ausgang der Triggerstufe T ein Triggersignal TS erscheint, das das Verlassen des mechanischen Nullpunkts $x_0$ anzeigt.

Wenn das Analogsignal S einen Wert größer $S_0$ besitzt, wird der Kondensator C durch die Stromquelle Q weiter aufgeladen, bis beim erneuten Leitendwerden der Diode $D_1$ das Referenzsignal RS wiederum einen um die Flußspannung $UF_1$ der Diode $D_1$ größeren positiven Wert als das Analogsignal S aufweist. Beim Rückkehren des Analogsignale S auf den Wert $S_0$ wird der Kondensator C über die Diode $D_1$ schnell auf den ursprünglichen Wert entladen, so daß sich eine kurze Wiederbereitschaftszeit ergibt.

Zur Verkürzung der Aufladezeit des Kondensators C Diode $D_2$ antiparallel zur Diode $D_1$ geschaltet. Die Einschaltzeit verkürzt sich damit entsprechend dem Verhältnis der Summe der konstanten Flußspannungen $UF_1 + UF_2$ der

Dioden $D_1$, $D_2$ zum gesamten Referenzsignal RS.

Die zulässige minimale Änderungsgeschwindigkeit des Analogsignals S wird durch die Änderungsgeschwindigkeit des Referenzsignals RS begrenzt. Zur Erzielung einer niedrigen minimalen Meßgeschwindigkeit sind deshalb große Werte für den Betrag C/I erforderlich.

Diese Abhängigkeit des Referenzsignals RS vom Analogsignal S macht die Indikation des Nullpunktes $x_0$ von Drifteffekten weitgehend unabhängig, die beispielsweise durch Temperaturgang und Alterung bedingt sind.

Bei sehr empfindlichen Wandlern W können Werte für den Drifteffekt auftreten, die größer als der Arbeitsbereich des Wandlers W, der Triggerstufe T und der Referenzsignalstufe R sind. In solchen Fällen wird eine Schaltungsanordnung nach Figur 3 vorgeschlagen, bei der das Analogsignal S des mit der Eingangsgröße E beaufschlagten Wandlers W am ersten Eingang vorzugsweise eines Differenzveretärkers D anliegt und das verstärkte Analogsignal DS am Ausgang des Differenzverstärkers D den ersten Eingang der Triggerstufe T und den Eingang der Referenzsignalstufe R beaufschlagt. Das vom verstärkten Analogsignal DS abhängige Referenzsignal RS liegt einmal am zweiten Eingang der Triggerstufe T an und ist zum anderen mit dem zweiten Eingang des Verstärkers D über einen Widerstand $R_1$ zur Reduzierung der Auswirkungen des Drifteffekts gegengekoppelt. Der Differenzverstärker D kann durch einen beliebigen Verstärker ersetzt werden.

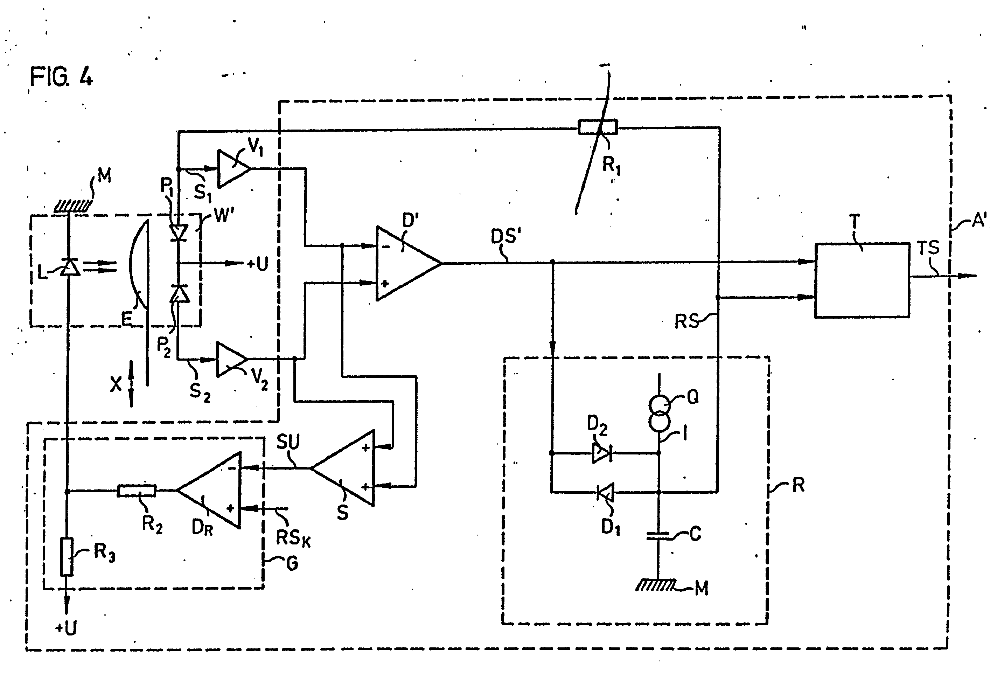

In Figur 4 ist eine Meßeinrichtung mit einem lichtelektrischen Differenzwandler W' und einer Auswerteschaltung A' dargestellt. Die Lichtstrahlen einer Lichtquelle L als Hilfsenergiequelle in Form einer lichtemittierenden Diode fallen durch ein senkrecht zur Lichtstrahlenrichtung bewegliches Element E in Form einer Zylinderlinse auf die beiden gegeneinander in Meßrichtung x versetzten Photoelemente $P_1$, $P_2$ des Differenzphotoempfängers W' (schematisch dargestellt). Bei gleich starker Beleuchtung der beiden Photoelemente $P_1$, $P_2$ ergibt sich eine Symmetrielage des beweglichen Elements E, die einen mechanischen Nullpunkt $x_0$ definiert. Zur Indikation des Nullpunktes $x_0$ des beweglichen Elements E bezüglich des Differenzphotoempfängers W' werden die von den Photoelementen $P_1$, $P_2$ gelieferten Analogsignale $S_1$, $S_2$ über Vorverstärker $V_1$, $V_2$ in der Auswerteschaltung A' einmal den Eingängen einer Differenzstufe D' und zum anderen den Eingängen einer Summierstufe S zugeführt. Das Differenzsignal DS' am Ausgang der Differenzstufe D' liegt einerseits am ersten Eingang der Triggerstufe T und andererseits am Eingang der Referenzstufe R an; das von der Referenzsignalstufe R gelieferte Referenzsignal RS ist vom Differenzsignal DS' abhängig und wird dem zweiten Eingang der Triggerstufe T zugeführt. In der oben beschriebenen Weise wird das Verlassen des mechanischen Nullpunkts $x_0$ durch das Element E durch das Auftreten des Triggersignals TS am Ausgang der Triggerstufe T angezeigt.

Die Genauigkeit des Schaltpunktes der Triggerstufe T an der Ansprechschwelle AS ist unter anderem von der Steilheit $UF_1/(x_1 - x_0)$ der Kennlinie des Differenzsignals DS' gemäß Figur 2 abhängig. Bei einem Differenzwandler W' mit einer Hilfsenergiequelle L besteht die Möglichkeit, die Steilheit $UF_1/(x_1 - x_0)$ der Kennlinie des Differenzsignals DS' durch eine Regelung der Strahlungsleistung der Lichtquelle L konstant zu halten. Diese Stabilisierung wird dadurch erreicht, daß das Summensignal SU am Ausgang der Summierstufe S, an deren Eingangen die vorverstärkten Analogsignale $S_1$, $S_2$ der photoelemente $P_1$, $P_2$ des Differenzphotoempfängers W' anliegen, über ein Regelglied G der Lichtquelle L zugeführt wird. Das Regelglied G besteht aus einem Differenzverstärker $D_R$, dessen invertierenden Eingang das Summensignal SU der Summierstufe und dessen nichtinvertierendem Eingang ein konstantes Referenzsignal $RS_K$ zugeführt werden, und aus zwei Widerständen $R_2$, $R_3$. Die Lichtquelle L ist mit ihrem negativen Pol mit Masse M und mit ihrem positiven Pol über den Widerstand $R_3$ mit einer positiven Versorgungsspannung +U verbunden, die gleichfalls die negativen pole der Photoelemente $P_1$, $P_2$ des Differenzphotoempfängers W' beaufschlagt.

Die Dioden $D_1$, $D_2$ werden durch $S_i$-Dioden oder Zenerdioden gebildet, die eine annähernd konstante Flußspannung $UF_1$, $UF_2$ aufweisen.

Die mechanische Eingangsgröße E kann beispielsweise einen Weg, einen Winkel, eine Kraft, einen Druck oder eine Spannung darstellen.

Die Erfindung ist nicht nur zur Indikation eines mechanischen Nullpunktes einer mechanischen Eingangsgröße, sondern insbesondere auch bei positionsmeßeinrichtungen einsetzbar.

**Patentansprüche**

1. Meßeinrichtung zur Messung der Relativlage zweier Objekte mit einem mechanisch-elektrischen Wandler (W) zur Umwandlung einer mechanischen Eingangsgröße (E), insbesondere einer Länge oder eines Winkels, in ein elektrisches Analogsignal (8), das einer Auswerteschaltung (A) zugeführt wird, dadurch gekennzeichnet, daß das Analogsignal (8) des Wandlers (W) in der Auswerteschaltung (A) einmal am ersten Eingang einer Triggerstufe (T) und zum anderen am Eingang einer Referenzsignalstufe (R) anliegt, denen Referenzsignal (RS) in Abhängigkeit vom Analogsignal (S) des Wandlers (W) den zweiten Eingang der Triggerstufe (T) beaufschlagt, deren Triggersignal (TS) zur Indikation einer Änderung der Eingangsgröße (E) herangezogen wird.

2. Meßeinrichtung nach Anspruch 1, dadurch gekennzeichnet, daß das Triggersignal (TS) der Triggerstufe (T) zur Indikation eines mechanischen Nullpunktes (x₀) der Eingangsgröße (E) herangezogen wird.

3. Meßeinrichtung nach Anspruch 1, dadurch gekennzeichnet, daß das Analogsignal (S) des Wandlers (W) den ersten Eingang eines Verstärkers (D) und das verstärkte Analogsignal (DS) des Ausgangs des Verstärkers (D) den ersten Eingang der Trigge stufe (T) und den Eingang der Referenzsignalstufe (R) beaufschlagen und daß das Referenzsignal (RS) einmal am zweiten Eingang der Triggerstufe (T) anliegt und zum anderen mit dem zweitem Eingang des Verstärkers (D) gegengekoppelt ist.

4. Meßeinrichtung nach Anspruch 1 oder 3, dadurch gekennzeichnet, daß die Referenzsignalstufe (R) eine Reihenschaltung aus einem Kondensator (C) und einer Stromquelle (Q) aufweist, deren gemeinsamer Verbindungspunkt mit dem Ausgang und über wenigstens eine Diode ($D_1$, $D_2$) mit dem Eingang der Referenzsignalstufe (R) verbunden ist.

5. Meßeinrichtung nach Anspruch 1 oder 3, dadurch gekennzeichnet, daß der Wandler durch einen Differenzwandler (W') mit einer Hilfsenergiequelle (L) gebildet ist.

6. Meßeinrichtung nach Anspruch 5, dadurch gekennzeichnet, daß die Hilfsenergiequelle (L) durch ein aus den Analogsignalen ($S_1$, $S_2$) des Differenzwandlers (W') gewonnenes Summensignal (SU) über ein Regelglied (G) beaufschlagt ist.

7. Meßeinrichtung nach Anspruch 3, dadurch gekennzeichnet, daß das Referenzsignal (RS) über einen Widerstand ($R_1$) mit dem zweiten Eingang des Verstärkers (D) gegengekoppelt ist.

6. Meßeinrichtung nach Anspruch 4, dadurch gekennzeichnet, daß die Diode ($D_2$) antiparallel zur Diode ($D_1$) geschaltet ist.

9. Meßeinrichtung nach Anspruch 4, dadurch gekennzeichnet, daß die Dioden ($D_1$, $D_2$) durch Zenerdioden oder durch $S_i$-Dioden gebildet sind.

10. Meßeinrichtung nach Anspruch 6, dadurch gekennzeichnet, daß das Regelglied (G) aus einem von einem Referenzsignal ($RS_K$) beaufschlagten Differenzverstärker ($D_R$) und aus Widerständen ($R_2$, $R_3$) besteht.

11. Meßeinrichtung nach Anspruch 3, dadurch gekennzeichnet, daß der Verstärker (D) durch einen Differenzverstärker gebildet ist.

**Claims**

1. Measuring device for measuring the relative position of two objects by means of a mechanical/electrical transducer (W) for converting a mechanical input quantity (E), particularly a length or an angle, into an electric analog signal (8) which is supplied to an evaluating circuit (A), characterized in that the analog signal (S) of the transducer (W) is present in the evaluating circuit (A), both at the first input of a trigger stage (T), and at the input of a reference signal stage (R), the reference signal (RS) of which is applied, in dependence on the analog signal (8) of the transducer (W), to the second input of the trigger stage (T) the trigger signal (TS) of which is used for indicating a change in the input quantity (E).

2. Measuring device according to Claim 1, characterized in that the trigger signal (TS) of the trigger stage (T) is used for indicating a mechanical zero point ($x_0$) of the input quantity (E).

3. Measuring device according to Claim 1, characterized in that the analog signal (S) of the transducer (W) is applied to the first input of an amplifier (D) and the amplified analog signal (DS) of the output of the amplifier (D) is applied to the first input of the trigger stage (T) and the input of the reference signal stage (R) and that the reference signal (RS) is both present at the second input of the trigger stage (T), and is fed back to the second input of the amplifier (D).

4. Measuring device according to Claim 1 or 3, characterized in that the reference signal stage (R) displays a series circuit of a capacitor (C) and a current source (Q), the common junction of which is connected to the output and via at least one diode (D1, D2) tp the input of the reference signal stage (R).

5. Measuring device according to Claim 1 or 3, characterized in that the transducer is formed by a differential transducer (W') having an auxiliary power source (L).

6. Measuring device according to Claim 5, characterized in that a sum signal (SU) obtained from the analog signals (81,82) of the differential transducer (W') is applied via a regulating section (6) to the auxiliary energy source (L).

7. Measuring device according to Claim 3, characterized in that the reference signal (RS) is fed back via a resistor ($R_1$) to the second input of the amplifier (D).

8. Measuring device according to Claim 4, characterized in that the diode ($D_2$) is connected antiparallel to the diode ($D_1$).

9. Measuring device according to Claim 4, characterized in that the diodes ($D_1$, $D_2$) are formed by Zener diodes or by $S_i$ diodes.

10. Measuring device according to Claim 6, characterized in that the regulating section (G) consists of a differential amplifier ($D_R$) and of resistors ($R_2$, $R_3$) and that a reference signal ($RS_K$) is applied to the differeritial amplifier ($D_R$).

11. Measuring device according to Claim 3, characterised in that the amplifier (D) is formed by a differential amplifier.

## Revendications

Dispositif de mesure pour mesurer la position relative de deux objets, comprenant un convertisseur mécanique-électrique (W) pour convertir une grandeur d'entrée mécanique (E), en particulier une longueur ou un angle, en un signal électrique analogique (8) qui est appliquée à un circuit d'exploitation (A), caractérisé par le fait que le signal analogique (S) du convertisseur (W) est envoyé dans le circuit d'exploitation (A) d'une part à la première entrée d'un étage déclencheur (T) et d'autre part à l'entrée d'un étage de signaux de référence (R) dont le signal de référence (RS) est appliqué en fonction du signal analogique (S) du convertisseur (W) à la seconde entrée de l'étage déclencheur (T) dont le signal déclencheur (TS) est utilisé pour l'indication d'une variation de la grandeur d'entrée (E).

2. Dispositif de mesure suivant la revendication 1, caractérisé par le fait que le signal déclencheur (TS) de l'étage déclencheur (T) est utilisé pour l'indication d'un point zéro mécanique $(x_o)$ de la grandeur d'entrée (E).

3. Dispositif de mesure suivant la revendication 1, caractérisé par le fait que le signal analogique (S) du convertisseur (W) agit sur la première entrée d'un amplificateur (D) et le signal analogique amplifié (DS) à la sortie de l'amplificateur (D) agit sur la première entrée de l'étage déclencheur (T) et sur l'entrée de l'étage de signaux de référence (R) et que le signal de référence (RS) est appliqué d'une part à la seconde entrée de l'étage déclencheur (T) et d'autre part en contre-réaction à la seconde entrée de l'amplificateur (D).

4. Dispositif de mesure suivant la revendication 1 ou 3, caractérisé par le fait que l'étage de signaux de référence (R) comprend un montage en série d'un condensateur (C) et d'une source de courant (Q), dont le point de jonction commun est relié à la sortie et, par l'intermédiaire d'au moins une diode $(D_1, D_2)$, à l'entrée de l'étage de signaux de référence (R).

5. Dispositif de mesure suivant la revendication 1 ou 3, caractérisé par le fait que le convertisseur est constitué par un convertisseur différentiel (W') avec une source d'énergie auxiliaire (L).

6. Dispositif de mesure suivant la revendication 5, caractérisé par le fait qu'à la source d'énergie auxiliaire (L) est appliqué, en passant par un organe de réglage (G), un signal de somme (SU) obtenu à partir des signaux analogiques $(S_1, S_2)$ du convertisseur différentiel (W').

7. Dispositif de mesure suivant la revendication 3, caractérisé par le fait que le signal de référence est appliqué en contre-réaction, par l'intermédiaire d'une résistance $(R_1)$, à la seconde entrée de l'amplificateur (D).

8. Dispositif de mesure suivant la revendication 4, caractérisé par le fait que la diode $(D_2)$ est montée en antiparallèle avec la diode $(D_1)$.

9. Dispositif de mesure suivant la revendication 4, caractérisé par le fait que les diodes $(D_1, D_2)$ sont constituées par des diodes Zener ou par des diodes $S_i$.

10. Dispositif de mesure suivant la revendication 6, caractérisé par le fait que l'organe de réglage (G) est constitué par un amplificateur différentiel (DR) recevant un signal de référence $(RS_K)$ et par des résistances $(R_2, R_3)$.

11. Dispositif de mesure suivant la revendication 3, caractérisé par le fait que l'amplificateur (D) est constitué par un amplificateur différentiel.

FIG. 1

FIG. 2

FIG. 3

FIG. 1

FIG. 2

FIG. 3

1

FIG. 4